# NEUE EUROPÄISCHE PATENTSCHRIFT

(11) **EP 0 715 813 B2**
(45) Veröffentlichungstag und Bekanntmachung des Hinweises auf die Entscheidung über den Einspruch: **27.08.2014**
(45) Hinweis auf die Patenterteilung: 04.08.1999
(21) Anmeldenummer: 94119368.2
(22) Anmeldetag: 08.12.1994
(51) Int. Cl.: A23G 1/21, A23G 1/20

(54) **Vorrichtung zur Herstellung von Schokoladenartikeln, insbesondere von Hülsen für Schokoladenhohlkörper**
Apparatus for making chocolate articles, particularly shells for chocolate hollow articles
Appareil pour la fabrication d'articles en chocolat, en particulier des coquilles pour corps creux en chocolat

(43) Veröffentlichungstag der Anmeldung: 12.06.1996
(73) Patentinhaber: Gebr. Bindler Maschinenfabrik GmbH & Co. KG, D-51702 Bergneustadt (DE)
(72) Erfinder: Bindler,U. Dipl.-Ing., D-51702 Bergneustadt (DE); Müller, M. Dr.-Ing., D-51580 Reichshof-Heidberg (DE); Hannich, H. Dipl.-Ing., D-51503 Rösrath-Hoffnungsthal (DE)
(74) Vertreter: Hepp Wenger Ryffel AG

(56) Entgegenhaltungen:
- EP-A- 0 589 820
- WO-A-94/12046
- GB-A- 207 974
- GB-A- 1 483 614
- US-A- 2 664 834
- US-A- 5 242 291

## Beschreibung

Die Erfindung betrifft eine Vorrichtung zur Herstellung einer Hülse für Schokoladenhohlkörper, mit einer Fördereinrichtung zum Transport von Formen, die jeweils mindestens eine Alveole zur Eindosierung von flüssiger Schokoladenmasse aufweisen, und mit einer Trägereinrichtung für mindestens ein Stempelelement, mittels der der mindestens einen Alveole während einer vorgebbaren Verweildauer ein Stempelelement zuführbar ist.

Eine Vorrichtung dieser Art ist aus der GB-PS 207974 bekannt. Bei diesem Stand der Technik ist ein von einem Kühlmittel durchströmter Stempel vorgesehen, welcher in die Schokoladenmasse eintaucht. Das Eintauchen erfolgt dabei in einem solchen Maße, daß der entstehende Schokoladenhohlkörper die gewünschte Dicke erhält. Der Stempel ist bei diesem Stand der Technik mit einem Trennmittel versehen, damit die Schokoladenmasse nicht an der Oberfläche des Stempels haften bleibt.

Eine andere Vorrichtung zur Herstellung von Schokoladenartikeln ist aus der EP 0 589 820 A1 bekannt. Hierbei wird der Stempel, der in die Schokoladenmasse eintaucht, auf eine Temperatur von mindestens 0 °C heruntergekühlt.

Bei beiden genannten Vorrichtungen erfolgt der Eintauch- bzw. Hebevorgang der Stempeleinrichtung innerhalb der Stillstandszeit der Form, die üblicherweise der halben Maschinentaktzeit entspricht. Um hierbei eine ausreichende Ausbildung der Hülse zu erreichen, sind sehr tiefe Stempeltemperaturen bzw. hohe Maschinentaktzeiten erforderlich und damit nur geringe Taktfrequenzen möglich.

Davon ausgehend liegt der Erfindung die Aufgabe zugrunde, eine Vorrichtung dahingehend weiterzuentwickeln, daß ohne das Erfordernis einer Kühlung des Stempels auf tiefe Temperaturen eine Maschinentaktfrequenz realisierbar ist, die nicht durch die zur ausreichenden Kühlung notwendige Verweildauer des Stempels in der Schokoladenmasse begrenzt ist.

Diese Aufgabe wird durch die Merkmale der unabhängigen Ansprüche 1 bzw. 4 gelöst.

Die Erfindung zeichnet sich dadurch aus, daß Maschinentaktzeit einerseits und Verweildauer des Stempels in der sich verfestigenden Schokoladenmasse andererseits voneinander entkoppelt werden. Weiterhin wird ein Stillstand der Form zum Eintauchen und Entnehmen des Stempelsüberflüssig, so daß eine kontinuierliche Arbeitsweise der Hülsenbildung möglich ist.

Die Entkopplung erfolgt gemäß Anspruch 1 bei gemeinsamer Bewegung von Form und Stempeleinheit auf einer geradlinigen Bahn dadurch, daß die Stempeleinheiten mit den taktweise oder kontinuierlich transportierten Formen solange mitbewegt werden, wie es entsprechend der durch die bestimmenden Parameter notwendigen Verweildauer der Stempelelemente in der Schokoladenmasse erforderlich ist

Hierbei erfolgt eine Anpassung der Bewegung der Stempeleinheiten an die Formenbewegung.

Alternativ hierzu ist gemäß Anspruch 4 vorgesehen, daß die Bewegungseinrichtung einen im Transportweg der Formen angeordneten, als Trägerelement dienenden Drehstern mit mehreren, auf einer Kreisbahn umfänglich versetzt angeordneten Stempelelementen aufweist, wobei entlang mindestens einer Teilkreisbahn auf dem Drehstern der Transport von Form und Stempelelement gemeinsam erfolgt. Hierdurch wird es möglich, im Bereich der Stempeleinrichtung die Art des Formentransportes entsprechend der Bewegung der im Drehstern angeordneten Stempelelemente zu gestalten, indem nach dem Eintauchen des Stempelelementes in die Schokoladenmasse die Bewegung der Form von einer Linearbewegung in eine Drehbewegung umgesetzt wird. Dabei muß die Drehbewegung so abgestimmt sein, daß die Verweildauer des Stempels in der Schokoladenmasse um ein entsprechendes Vielfaches der Maschinentaktzeit verlängert wird. Die Anzahl der auf dem Umfang des Drehsterns anzuordnenden Stempelelemente ist in Abhängigkeit von dem erforderlichen Verhältnis der notwendigen Verweildauer und der Maschinentakfrequenz und dem Anteil der gleichzeitig zum Einsatz kommenden Stempelelemente zu wählen. Nach dem gemeinsamen Transport von Stempeleinrichtung und Form um den Drehstern erfolgt der weitere Formenverschub in bekannter Weise.

Gemäß der ersten Variante der Erfindung sind die Stempelelemente in einem Hin- und Rücklauf oberhalb oder unterhalb des Formentransportes angeordnet, wobei während der Hinbewegung die Stempeleinheiten gemeinsam mit den Formen transportiert werden.

Gemäß der zweiten Variante der Erfindung rotieren die Stempelelemente auf einem Drehstern um eine Drehachse, die horizontal in der Formenoberfläche und senkrecht zur Formentransportrichtung liegt. Dabei können die einzelnen Stempelelemente entweder fest angeordnet sein, insbesondere radial ausgerichtet, oder während des Transportes zusätzlich um ihre Befestigungsachse so gedreht werden, daß sie stets waagerecht stehen. Im ersten Fall ist der Aufbau der Vorrichtung einfacher und ein notwendiges Wenden der Form zum Schneiden nach dem Stempelvorgang entfällt, während im zweiten Fall der Vorteil darin besteht, daß die Form während des gesamten Stempelvorgangs waagerecht gehalten wird.

Gemäß einer dritten Variante ist die Drehachse des Drehsterns senkrecht zur Oberfläche der Formen angeordnet, so daß die Bewegung von Form und Stempelement während der gemeinsamen Bewegung in der Ebene des Formentransportes erfolgt.

Ein besonderer Vorteil der Erfindung ist darin zu sehen, daß die Nutzung von vergleichsweise hohen Kühltemperaturen von 0°C und darüber bei entsprechend verlängerter Stempelverweildauer eine ausreichende Hülsenbildung ermöglicht. Bei der Wahl der Kühltemperatur kommt es auf zwei Dinge besonders an: Einerseits muß eine ausreichende Verfestigung der Schokolade erreicht werden. Dies geschieht durch Bestimmung der zur Hülsenbildung notwendigen Wärmeabfuhr, die durch das Zusammenwirken von Stempeltemperatur und Stempelverweildauer realisiert wird. Daraus folgt, daß bei entsprechend verlängerter Verweildauer zur Verfestigung der Schokolade Stempeltemperaturen von oberhalb 0°C ausreichen. Als zweiter Aspekt spielt bei der Wahl der Kühltemperatur die Haftung zwischen Schokolade und Stempel eine Rolle. Außer der bekannten Nutzung von Trennmitteln (z. B. GB-PS 207974) kann bei bestimmten Paarungen von Schokolade und Stempelmaterial das Anhaften von Schokolade am Stempel dadurch verhindert werden, daß das Stempelelement mindestens auf eine solche Temperatur heruntergekühlt ist, daß der Taupunkt der die Schokoladenmasse umgebenden Atmosphäre erreicht bzw. unterschritten wird. Untersuchungen haben gezeigt, daß dann, wenn die der Schokoladenmasse zugewandte Flache des Stempelelementes vor dem Kontakt mit der Schokoladenmasse beschlägt, die Notwendigkeit eines zusätzlichen Trennmittels nicht mehr besteht. Vielmehr kann ein Entfernen des Stempels aus der Schokoladenmasse hierbei erfolgen, ohne daß nennenswerte Rückstände auf der Oberfläche des Stempelelementes verbleiben. Durch eine entsprechende Beschichtung des Stempels kann eine Begünstigung des Lösevorganges der Schokolade vom Stempel erreicht werden.

Die Kühlung des Stempelelementes kann entweder durch kontinuierliche Durchströmung mit einem geeigneten Kühlmittel, durch ständigen Kontakt mit einem durch geeignetes Kühlmittel durchströmten Objekt oder durch Luftkühlung v.a. vor Beginn des Stempelvorganges erfolgen.

Die Erfindung wird im folgenden anhand von Ausführungsbeispielen mit Hilfe einer Zeichnung näher erläutert.

Dabei zeigen
Figur 1 ein erstes Ausführungsbeispiel zu einer ersten Variante der Erfindung
Figur 2 ein zweites Ausführungsbeispiel zu der ersten Variante der Erfindung
Figur 3 ein erstes Ausführungsbeispiel zu einer zweiten Variante der Erfindung
Figur 4 ein zweites Ausführungsbeispiel zu der zweiten Variante der Erfindung
Figur 5 ein erstes Ausführungsbeispiel zu einer dritten Variante der Erfindung
Figur 6 ein zweites Ausführungsbeispiel zu der dritten Variante der Erfindung

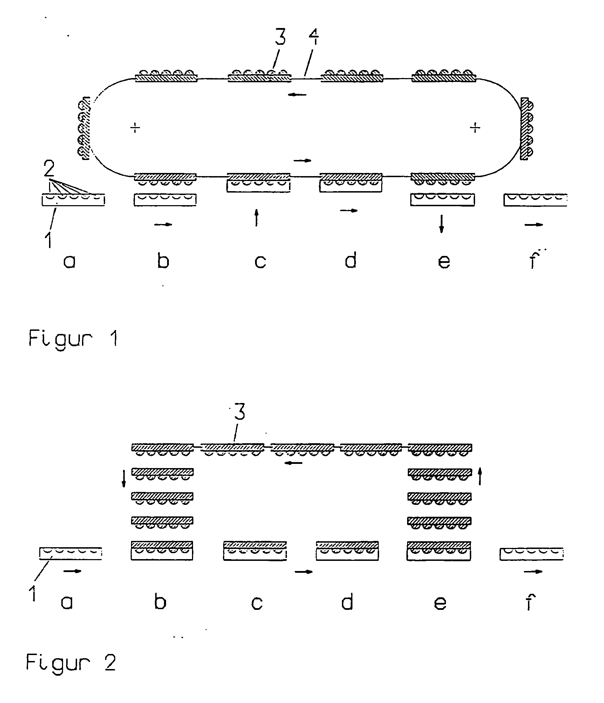

Unter Bezugnahme auf Figur 1 wird in waagerechter Richtung von links nach rechts mittels einer geeigneten Vorrichtung eine Form 1 zugeführt, welche auf ihrer Oberseite Alveolen 2 aufweist. Diese Alveolen 2 stellen Mulden dar, in die durch eine geeignete Dosiervorrichtung eine bestimmte Menge flüssiger, verarbeitungsbereiter Schokoladenmasse eindosiert wird. Der Vorschub der einzelnen Formen 1 erfolgt im in Figur 1 dargestellten Maschinentakt bzw. kontinuierlich.

Nach Eindosierung der Schokoladenmasse in die Alveolen 2 erfolgt in Figur 1 im mit a bezeichneten Takt der Transport der Form 1 in den Stempelbereich. Die einzelnen Stempelelemente 3 sind entsprechend der Abstände der Formen zueinander an einer Trägereinrichtung 4 befestigt und bewegen sich im Takt b parallel und synchron zum Formentransport. Da jede Form mehrere Alveolen aufweist, werden die den einzelnen Alveolen zugeordneten Stempelelemente 3 gemeinschaftlich bewegt. Die Form 1 kann nun mit dem Stempelelement 3 in Eingriff gebracht werden (Takt c), worauf die gemeinsame Bewegung von Stempel und Form über mehrere Maschinentakte erfolgt (Takt d). Bei Erreichen des Taktes e wird die Form aus dem Eingriff des Stempelelementes gebracht und aus dem Stempelbereich befördert (Takt f). Die Stempelelemente 3 werden mit Hilfe der Trägereinrichtung 4 an den Ausgangspunkt des Stempelvorganges transportiert.

Figur 2 stellt in Abwandlung der in Figur 1 beschriebenen Vorrichtung die Nutzung von Stempelelementen 3 in Form von Kälteakkumulatoren dar, die zu Beginn des Stempelvorganges in die Formen 1 abgesenkt werden (Takt b) und nach einer bestimmten Verweildauer (Takte c und d) wieder entnommen werden (Takt e). Die Kühlung der Stempelelemente 3 erfolgt hierbei durch den Wärmeaustausch mit der Umgebung v.a. während deren Rückbewegung. Der Vorteil gegenüber dem ersten Ausführungsbeispiel dieser Variante besteht in der höheren Flexibilität der Vorrichtung bei einem Artikelwechsel.

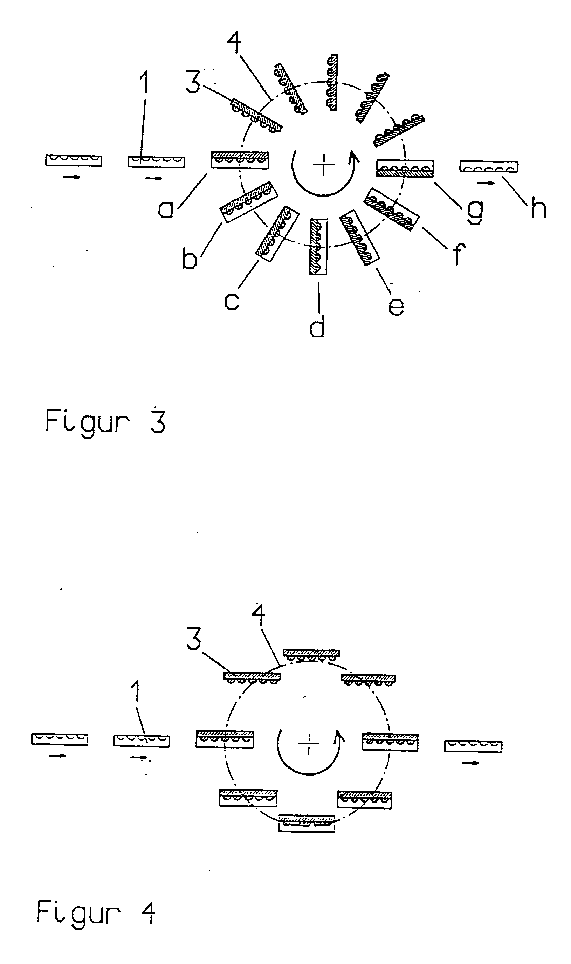

Bei den Varianten mit radialer Anordnung der Stempelelemente 3 (Figur 3 bis 6) erfolgt der Transport der Form 1 nach Eindosierung der Schokoladenmasse in die Alveolen in den Bereich eines als Trägereinrichtung dienenden Drehkranzes 4, welcher umfänglich versetzt angeordnete Stempelelemente 3 aufweist. Die Bewegung des Drehsternes 4 ist auf die Taktzeit des Formenvorschubs abgestimmt.

In Figur 3 ist das erste Ausführungsbeispiel der zweiten Variante der Erfindung dargestellt. Hierbei drehen sich die Stempelelemente im Drehstern 4 um eine horizontal in der Formenoberfläche und senkrecht zur Formentransportrichtung liegende Achse. Während des mit a bezeichneten Taktes erfolgt ein Eintauchen des entsprechend positionierten Stempelelmentes 3 in die flüssige Schokoladenmasse. Dabei wird die Form 1 durch die auf dem Drehstern 4 befindliche Stempeleinheit 3 mitgenommen und durchläuft anschließend die Takte b-f. Nach Erreichen des Taktes g werden Form und Stempel voneinander getrennt und die Form wird aus dem Drehstern 4 befördert, woraufhin sie im nachfolgenden Takt h mit umgekehrter Orientierung der Alveolen fortan zum eventuell nachfolgenden Schneiden der seitlich des Stempels herausgetretenen Schokolade weiterbefördert wird.

Das in Figur 4 dargestellte zweite Ausführungsbeispiel zur zweiten Variante der Erfindung unterscheidet sich von dem Beispiel nach Figur 3 dadurch, daß die einzelnen Stempelelemente 3 stets horizontal positioniert sind, so daß nach dem Durchlaufen des Drehsternes 4 die Alveolen in der Form 1 auf der Oberseite angeordnet bleiben.

Im übrigen unterscheidet sich die Vorrichtung nach Figur 4 von derjenigen nach Figur 3 dadurch, daß der Umfang des Drehsternes bei konstanter Maschinentaktfrequenz und gleicher notwendiger Verweildauer des Stempels in der Form bzw. in der Alveole entsprechend großer ist.

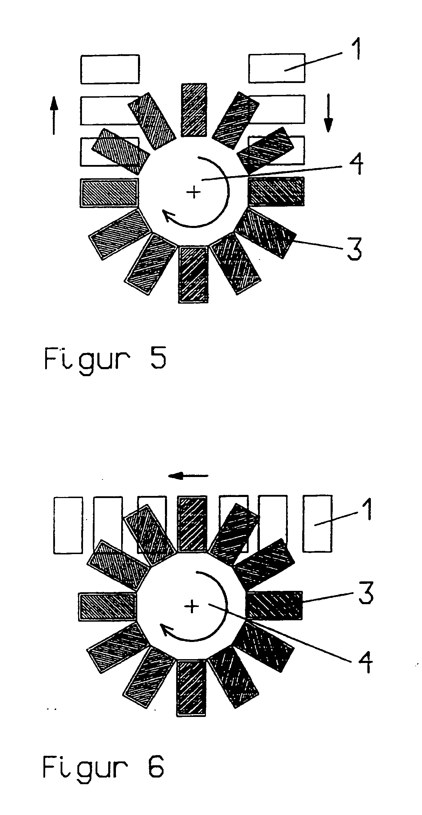

In Figur 5 ist das erste Ausführungsbeispiel der dritten Variante der Erfindung dargestellt. Im Unterschied zur zweiten Variante drehen sich die Stempelelemente im Drehstern 4 nicht um eine horizontal in der Formenoberfläche und senkrecht zur Formentransportrichtung liegenden Achse, sondern um eine Achse, die senkrecht zur Formenoberfläche angeordnet ist. Hierdurch ist erreicht, daß der gemeinsame Transport von Form 1 und Stempelelement 3 in einer zur Formenoberfläche waagerechten Ebene verläuft. Damit ergeben sich gegenüber den o. g. Varianten Vorteile bei der Handhabung von Form und Stempel und im einfacheren Aufbau der Vorrichtung.

Gemäß Figur 5 erfolgt der gemeinsame Transport von Form 1 und Stempelelement 3 entlang einer Teilkreisbahn über einen Winkel von 180°. Im Unterschied dazu erfolgt der gemeinsame Transport von Stempel und Form gemäß Figur 6 während einer vollen Kreisbewegung.

Bei gleicher Anzahl von Stempelelementen 3 auf dem Umfang des Drehsternes 4 erlaubt die Gestaltung nach Figur 6 somit eine Verdopplung der Verweildauer und eine nahezu 100 %-ige Stempelausnutzung.

Die Erfindung erlaubt eine flexible Einstellung des Systems von Maschinentaktfrequenz einerseits und notwendiger Verweildauer andererseits. Entsprechend dem herzustellenden Schokoladenhohlkörper und der Stempeltemperatur kann die Taktzeit und die Anzahl der auf dem Drehstern angeordneten Stempelelemente in Abhängigkeit von dem Anteil der gleichzeitig einwirkenden Stempelelemente aufeinander abgestimmt werden.

Alle genannten Varianten der Stempelanordnungen lassen sowohl eine taktweise als auch eine kontinuierliche Arbeitsweise der Anlage zu. Die Varianten mit radialer Anordnung der Stempelelemente erlauben durch Variation von Zu- und Abführungswinkel der Form die Einflußnahme auf den Anteil der gleichzeitig einwirkenden Stempelelemente und lassen unterschiedliche Einbauvarianten in den Anlagenfluß zu.

## Patentansprüche

1. Vorrichtung zur Herstellung einer Hülse für Schoholadenhohlkörper, mit einer Fordereinnchhing zum Transport von Formen (1), die jeweils mindestens eine Alveole (2) zur Eindosierung von flüssiger Schcholadenmasse aufweisen, und mit einer Trägereinrichtung für mindestens ein Stempelelement (3), mittels der der mindestens einen Alveole (2) während einer vorgebbaren Veweildauer ein Stempelelement (3) zuführbar ist, wobei die Trägereinrichtung (4) eine Anordnung von mehreren Stempelelementen (3) aufweist und daß Trägereinrichtung (4) und Fördereinrichtung derart aufeinander abgestimmt sind, daß entlang mindestens einer Teilstrecke der Transport von Form (1) und Stempelelement (3) als miteinander gekoppelte Einheiten erfolgt derart, daß die Form (1) mit dem Stempelelement (3) im Eingriff bringbar ist, worauf die gemeinsame Bewegung von Stempelelement (3) und Form (1) über mehrere Maschinentakte erfolgt, und wobei die Teilstrecken des einheitlichen Transportes von Form (1) und Stempelelement (3) geradlinig sind.

2. Vorrichtung nach Anspruch 1,
**dadurch gekennzeichnet, daß** die mehreren Stempelelemente (3) jeweils zueinander umfängflich versetzt auf einem umlaufenden Stempelträger befestigt sind.

3. Vorrichtung zur Herstellung einer Hülse für Schokoladenhohlkörper, mit einer Födereinrichtung zum Transport von Formen (1), die jeweils mindestens eine Alveole (2) zur Eindosierung von flüssiger Schokoladenmasse aufweisen, und mit einer Trägereinrichtung für mindestens ein Stempelelement (3), mittels der der mindestens einen Alveole (2) während einer vorgebbaren Verweildauer ein Stempetelement (3) zuführbar ist, wobei die Bewegungseinrichtung einen im Transportweg der Formen (1) angeordneten, als Trägerelement dienenden Drehstem (4) mit mehreren, auf einer Kreisbahn umtänglich versetzt angeordneten Stempelelementen (3) aufweist, wobei entlang mindestens einer Teilkreisbahn auf dem Drehstem (4) der Transport von Form (1) und Stempelement (3) gemeinsam erfolgt.

4. Vorrichtung nach Anspruch 3.
**dadurch gekennzeichnet, daß** die Stempelelemente (3) im Drehstern (4) fest angeordnet, insbesondere radial gerichtet sind.

5. Vorrichtung nach Anspruch 3 oder 4,
**dadurch gekennzeichnet, daß** entlang des
Umfangs des Drehstems (4) mehrere, vorzugsweise vier, acht oder zwölf, Stampelelemente (3) angeordnet sind.

6. Vorrichtung nach Anspruch 4,
**dadurch gekennzeichnet, daß** die Stempelelemente (3) im Drehstem (4) derart drehbar gelagert angeordnet sind, daß die Oberflachen jeder der Formen während der Kreisbewegung jeweils waagerecht gerichtet sind.

7. Vorrichtung nach einem der vorhergehenden Ansprüche 1 bis 6,
**dadurch gekennzeichnet daß** die Drehachse des Drehsterns (4) senkrecht zur Formentransportrichtung liegt.

8. Vorrichtung nach Anspruch 7,
**dadurch gekennzeichnet daß** die Drehachse des Drehsterns (4) in der Ebene der Formenoberfläche liegt.

9. Vorrichtung nach Anspruch 7,
**dadurch gekennzeichnet, daß** die Drehachse des Drehsterns (4) senkrecht zur Ebene der Formenoberfläche liegt.

10. Vorrichtung nach einem der vorhergehenden Ansprüche 1 bis 9,
**dadurch gekennzeichnet daß** das Stempelelement kontinuierlich von einem Kältemittel durchströmt wird.

11. Vorrichtung nach einem der vorhergehenden Ansprüche 1 bis 10.
**dadurch gekennzeichnet, daß** das Stempelelement durch ein kontinuierlich von einem Kältemittel durchströmtes Objekt gekühlt wird.

12. Vorrichtung nach einem der vorhergehenden Ansprüche 1 bis 10,
**dadurch gekennzeichnet, daß** das Stempelelement (3) vor und/oder während des Eintauchvorganges durch Luftkühlung gekühlt wird.

13. Vorrichtung nach Anspruch 12,
**dadurch gekennzeichnet, daß** die Luftkühlung in dem Teil der Stempeltransportbahn erfolgt, in dem kein gemeinsamer Transport von Stempelelement und Form erfolgt.

## Claims

1. A device for producing a shell for a hollow chocolate body, with a conveyor device for conveyance of molds (1), each having at least one alveolus (2) for metered addition of liquid chocolate preparation, and with a carrier device for at least one ram element (3) by means of which a ram element (3) can be conveyed to the minimum of one alveolus (2) during a predeterminable dwell time, where the carrier device (4) has an arrangement of several ram elements (3), and the carrier device (4) and conveyor device are coordinated with one another so that the mold (1) and the ram element (3) are conveyed along at least a portion of the distance as units linked together, such that the mold (1) can be brought into engagement with the ram element (3), where-upon the joint movement of the ram element (3) and mold (1) is effected over a number of machine cycles, and where the partial distances of joint conveyance of the mold (1) and the ram element (3) are linear.

2. A device according to Claim 1, **characterized in that** the multiple ram elements (3) are attached to the periphery of a revolving ram carrier with a mutual offset.

3. A device for producing a shell for a hollow chocolate body, with a conveyor device for conveying molds (1), each of which has at least one alveolus (2) for metered addition of liquid chocolate preparation, and with a carrier device for at least one ram element (3) by means of which a ram element (3) can be conveyed to the minimum of one alveolus (2) during a predeterminable dwell time, where the motion device has a rotational star (4) which is arranged in the path of conveyance of the molds (1), serves as a carrier element and has several ram elements (3) arranged on the periphery of a circular path with a mutual offset, with the mold (1) and ram element (3) being conveyed jointly along at least a partial circular path on the rotational star (4).

4. A device according to Claim 3, **characterized in that** the ram elements (3) are fixedly arranged in the rotational star (4), in particular in a radial arrangement.

5. A device according to Claim 3 or 4, **characterized in that** several ram elements (3), preferably four, eight or twelve, are arranged along the periphery of the rotational star (4).

6. A device according to Claim 4, **characterized in that** the ram elements (3) are arranged in the rotational star (4) so that they can rotate, so the surfaces of each of the molds are arranged horizontally during the circular movement.

7. A device according to one of the preceding Claims 1 through 6, **characterized in that** the axis of rotation of the rotational star (4) is perpendicular to the direction of conveyance of the molds.

8. A device according to Claim 7, **characterized in that** the axis of rotation of the rotational star (4) is in the plane of the mold surface.

9. A device according to Claim 7, **characterized in that** the axis of rotation of the rotational star (4) is perpendicular to the plane of the mold surface.

10. A device according to one of the preceding Claims 1 through 9, **characterized in that** a refrigerant flows continuously through the ram element.

11. A device according to one of the preceding Claims 1 through 10, **characterized in that** the ram element is cooled by an object through which a refrigerant is flowing continuously.

12. A device according to one of the preceding Claims 1 through 10, **characterized in that** the ram element (3) is cooled by air before and/or during the dipping operation.

13. A device according to Claim 12, **characterized in that** the air cooling takes place in the part of the ram conveyance path where there is no joint conveyance of the ram element and the mold.

## Revendications

1. Appareil pour fabriquer une coquille pour corps creux en chocolat, comprenant un dispositif de transport pour transporter des moules (1) qui présentent chacun au moins un alvéole (2) destiné à recevoir une dose d'une pâte de chocolat liquide, et un dispositif porteur pour au moins un élément poinçon (3) au moyen duquel un élément poinçon (3) peut être amené à l'au moins un alvéole (2) pendant un temps de séjour pouvant être prédéterminé,
dans lequel le dispositif porteur (4) présente un ensemble de plusieurs éléments poinçons (3) et que le dispositif porteur (4) et le dispositif de transport sont adaptés l'un à l'autre de telle manière que, le long d'au moins un trajet partiel, le transport du moule (1) et de l'élément poinçon (3) s'effectue sous la forme d'unités accouplées entre elles, de telle sorte que le moule (1) avec l'élément poinçon (3) peut être amené en prise, après quoi le mouvement conjoint de l'élément poinçon (3) et du moule (1) s'effectue pendant un certain nombre de cycles de machine, et dans lequel les trajets partiels du transport conjoint du moule (1) et de l'élément poinçon (3) sont rectilignes.

2. Dispositif selon la revendication 1,
**caractérisé en ce que** les plusieurs éléments poinçons (3) sont décalés circonférentiellement l'un par rapport à l'autre et sont fixés sur un support de poinçons tournant.

3. Dispositif pour la fabrication d'une coquille pour corps creux en chocolat, comprenant un dispositif transporteur destiné au transport des moules (1), qui présentent chacun au moins un alvéole (2) pour l'insertion dosée d'une pâte de chocolat liquide, et un dispositif porteur pour au moins un élément poinçon (3) au moyen duquel un élément poinçon (3) peut être acheminé à l'au moins un alvéole (2) pendant un temps de séjour pouvant être prédéterminé, le dispositif de déplacement comprenant une étoile tournante (4) disposée sur la trajectoire des moules (1), servant d'élément porteur, munie de plusieurs éléments poinçons (3) disposés décalés circonférentiellement sur une trajectoire circulaire, cependant que le long d'au moins une trajectoire en partie de cercle sur l'étoile tournante (4), le transport du moule (1) et de l'élément poinçon (3) s'effectue conjointement.

4. Dispositif selon la revendication 3,
**caractérisé en ce que** les éléments poinçons (3) sont disposés rigidement dans l'étoile toumante (4), en particulier orientés radialement.

5. Dispositif selon la revendication 3 ou 4,
**caractérisé en ce que** plusieurs, de préférence quatre, huit ou douze, éléments poinçons (3) sont disposés le long de la périphérie de l'étoile tournante (4).

6. Dispositif selon la revendication 4,
**caractérisé en ce que** les éléments poinçons (3) sont disposés rotatifs dans l'étoile tournante (4) de telle manière que les surfaces de chacun des moules soient orientées horizontalement pendant le mouvement circulaire.

7. Dispositif selon une des revendications précédentes 1 à 6, **caractérisé en ce que** l'axe de rotation de l'étoile tournante (4) est perpendiculaire à la direction du transport des moules.

8. Dispositif selon la revendication 7,
**caractérisé en ce que** l'axe de rotation de l'étoile tournante (4) est contenu dans le plan de la surface de moules.

9. Dispositif selon la revendication 7,
**caractérisé en ce que** l'axe de rotation de l'étoile tournante (4) est perpendiculaire au plan de la surface des moules.

10. Dispositif selon une des revendications précédentes 1 à 9, **caractérisé en ce que** l'élément poinçon est parcouru continuellement par un fluide de refroidissement.

11. Dispositif selon une des revendications précédentes 1 à 10, **caractérisé en ce que** l'élément poinçon est refroidi continuellement par un objet parcouru par un fluide de refroidissement.

12. Dispositif selon une des revendications précédentes 1 à 10, **caractérisé en ce que** l'élément poinçon (3) est refroidi par refroidissement à l'air avant et/ou pendant l'opération de plongée.

13. Dispositif selon la revendication 12,
**caractérisé en ce que** le refroidissement par l'air se produit dans la partie de la trajectoire des poinçons dans laquelle il ne se produit pas de transport conjoint de l'élément poinçon et du moule.
